# EUROPÄISCHE PATENTANMELDUNG

(11) **EP 4 764 457 A1**
(43) Veröffentlichungstag der Anmeldung: **24.06.2026**
(21) Anmeldenummer: 24220451.9
(22) Anmeldetag: 17.12.2024
(51) Int. Cl.: G01N 21/65, G01J 3/44

(54) **ANALYSEVORRICHTUNG**

(71) Anmelder: Endress+Hauser SICK GmbH+Co. KG, 01458 Ottendorf-Okrilla (DE)
(72) Erfinder: Fimpel, Peter, 78462 Konstanz (DE); Loskill, Martin, 78464 Konstanz (DE)
(74) Vertreter: Manitz Finsterwald Patent- und Rechtsanwaltspartnerschaft mbB

(57) **Zusammenfassung**

Eine Analysevorrichtung (11, 11', 11'') zum Analysieren einer Probensubstanz mittels Raman-Spektroskopie umfasst einen Probenraum (13), ein Lasersystem (17) zum Bestrahlen der Probensubstanz, ein dispersives optisches Element (12, 35, 35') zur spektralen Aufspaltung von Streulicht, das von der bestrahlten Probensubstanz ausgeht, eine Detektor-Einheit (20) zum Empfangen wenigstens eines Teils des spektral aufgespaltenen Streulichts und eine elektronische Auswertungseinrichtung (25), die mit der Detektor-Einheit (20) in Signalverbindung steht und dazu ausgebildet ist, anhand des empfangenen Streulichts wenigstens eine Raman-Linie zu bestimmen. Die Detektor-Einheit (20) weist zwei nebeneinander angeordnete Einzeldetektoren (21, 22) auf, die zum Ausgeben jeweiliger separater Signale (27) ausgebildet sind, wobei die elektronische Auswertungseinrichtung (25) dazu ausgebildet ist, beim Bestimmen der wenigstens einen Raman-Linie die Signale beider Einzeldetektoren (21, 22) der Detektor-Einheit (20) zu berücksichtigen.

## Beschreibung

Die Erfindung betrifft eine Analysevorrichtung zum Analysieren einer Probensubstanz mittels Raman-Spektroskopie, mit einem Probenraum zur Aufnahme der Probensubstanz, einem Lasersystem zum Bestrahlen der in dem Probenraum befindlichen Probensubstanz mit Laserlicht, einem dispersiven optischen Element zur spektralen Aufspaltung von Streulicht, das von der bestrahlten Probensubstanz ausgeht, wenigstens einer Detektor-Einheit zum Empfangen wenigstens eines Teils des spektral aufgespaltenen Streulichts und einer elektronischen Auswertungseinrichtung, die mit der wenigstens einen Detektor-Einheit in Signalverbindung steht und dazu ausgebildet ist, anhand des von der Detektor-Einheit empfangenen Streulichts wenigstens eine Raman-Linie zu bestimmen.

Derartige Vorrichtungen werden beispielsweise zur berührungslosen Bestimmung der Konzentration einzelner Stoffe in Stoffgemischen eingesetzt. Bei der Probensubstanz kann es sich um ein Gas oder ein Gasgemisch handeln. Entsprechende Gasanalysevorrichtungen werden zum Beispiel bei der Überwachung industrieller Prozesse benötigt. Es sind aber auch Flüssigkeiten und Feststoffe mittels Raman-Spektroskopie analysierbar.

Bei der Raman-Spektroskopie wird die unelastische Streuung von Licht an Materie untersucht, indem das von einer Substanz gestreute Licht spektral ausgewertet wird. Die detektierten Frequenzverschiebungen gegenüber dem eingestrahlten Licht gehen auf quantisierte Rotations-, Schwingungs- und Rotations-Schwingungs-Übergänge zurück und sind für verschiedene Molekülarten charakteristisch. Demgemäß ermöglicht die Raman-Spektroskopie sowohl eine Strukturanalyse von Molekülen als auch einen qualitativen und quantitativen Substanznachweis.

Häufig sind relativ komplexe Gemische mit vielen verschiedenen Stoffen zu analysieren. Ferner sind zunehmend Messungen an Stoffen gewünscht, die in besonders geringen Konzentrationen vorhanden sind. Entsprechende Analysen sind in der Praxis eine Herausforderung.

Es ist eine Aufgabe der Erfindung, eine Analysevorrichtung der vorstehend genannten Art anzugeben, die eine hohe Messempfindlichkeit und eine ausgeprägte Fähigkeit zur Unterscheidung zwischen unterschiedlichen Stoffen aufweist.

Die Lösung der Aufgabe erfolgt durch eine Analysevorrichtung mit den Merkmalen des Anspruchs 1.

Erfindungsgemäß weist die Detektor-Einheit zwei nebeneinander angeordnete Einzeldetektoren auf, die zum Ausgeben jeweiliger separater Signale ausgebildet sind, wobei die elektronische Auswertungseinrichtung dazu ausgebildet ist, beim Bestimmen der wenigstens einen Raman-Linie die Signale beider Einzeldetektoren der Detektor-Einheit zu berücksichtigen. Die Detektoreinheit kann zum Beispiel so vorgesehen sein, dass die Einzeldetektoren die jeweiligen separaten Signale an die Auswerteeinheit ausgeben.

Die spektrale Auflösung kann durch die Auswertung der beiden separaten Signale im Wesentlichen unabhängig von der räumlichen Ausdehnung der Einzeldetektoren erhöht werden. Insbesondere kann die Position eines beide Einzeldetektoren beaufschlagenden Lichtflecks besonders genau bestimmt werden, indem die Signale beider Einzeldetektoren in eine Beziehung zueinander gesetzt werden. Auf diese Weise ist es möglich, auch solche Stoffe zuverlässig zu unterscheiden, die relativ nahe beieinander liegende Raman-Linien aufweisen. Allgemein ist in der vorliegenden Offenbarung die Berücksichtigung der Signale beider Einzeldetektoren in dem Sinne zu verstehen, dass eine die Raman-Linie betreffende Gesamtgröße wie zum Beispiel die spektrale Lage erzeugt wird, in die beide separaten Signale eingehen.

Grundsätzlich kann das Bestimmen der Raman-Linie das Bestimmen der spektralen Lage, der spektralen Breite und/oder der Intensität der Raman-Linie umfassen. Die spektrale Lage korreliert im Allgemeinen mit einer räumlichen Position, weil die Frequenz des Lichts im Spektrometer mittels eines dispersiven optischen Elements, also eines Elements, das eine wellenlängenabhängige Strahlablenkung bewirkt, in den Ortsraum transformiert wird, also zum Beispiel mit Hilfe eines Prismas oder vorzugsweise eines Beugungsgitters.

Es ist vorzugsweise vorgesehen, dass jeweilige Lichtempfangsflächen der Einzeldetektoren, gegebenenfalls unter Zwischenanordnung einer Trennschicht oder Trennlage, aneinander angrenzen. Daraus resultiert ein scharfer Übergang von einem Einzeldetektor zum anderen Einzeldetektor, der eine besondere hohe spektrale Auflösung ermöglicht.

Um einen geeigneten Übergang zu schaffen, kann auch wenigstens einer der Einzeldetektoren eine Lichtempfangsfläche aufweisen, die durch ein Blendenelement in wenigstens einer Raumrichtung begrenzt ist. Die Signalstärke ist dann reduziert, was bei manchen Anwendungen jedoch hingenommen werden kann.

Es kann vorgesehen sein, dass die Analysevorrichtung für die Bestimmung unterschiedlicher Raman-Linien mehrere unterschiedlich positionierte Detektor-Einheiten aufweist, von denen jede zwei nebeneinander angeordnete Einzeldetektoren aufweist, die zum Ausgeben jeweiliger separater Signale, beispielsweise an die elektronische Auswertungseinrichtung, ausgebildet sind. Die Positionen der Detektor-Einheiten können hierbei anhand von erwarteten Raman-Linien ausgewählt sein, die mittels eines dispergierenden Elements räumlich voneinander getrennt werden.

Vorzugsweise umfasst die Analysevorrichtung eine Stellvorrichtung, die dazu ausgebildet ist, für das Bestimmen der wenigstens einen Raman-Linie den betreffenden Anteil des gestreuten Lichts von einem der Einzeldetektoren zu dem anderen Einzeldetektor zu verlagern. Durch die Verlagerung des betreffenden Lichtflecks, insbesondere über die Grenze zwischen den beiden Einzeldetektoren hinweg, kann der Übergang besonders exakt ausgewertet werden.

Gemäß einer Ausführungsform der Erfindung ist die elektronische Auswertungseinrichtung dazu ausgebildet, das Signal wenigstens eines der Einzeldetektoren und vorzugsweise die Signale beider Einzeldetektoren vor und nach der Verlagerung miteinander zu vergleichen, um die spektrale Schärfe zu erhöhen.

Eine weitere Ausführungsform der Erfindung sieht vor, dass das dispersive optische Element ein Beugungsgitter umfasst, das derart angeordnet und ausgebildet ist, dass derjenige Anteil des gestreuten Lichts, welcher einer vorgegebenen Raman-Linie zugeordnet ist, auf die Detektor-Einheit trifft, wobei das Beugungsgitter um eine Rotationsachse drehbar ist und die Stellvorrichtung einen steuerbaren Antrieb für das drehbare Beugungsgitter umfasst. Beugungsgitter, beispielsweise Blazegitter, werden bei der Raman-Spektroskopie insbesondere dazu eingesetzt, die schwache Raman-Strahlung von der Rayleigh-Strahlung zu trennen. Beugungsgitter weisen eine hohe spektrale Trennschärfe auf. Je nach Anwendung kann das Beugungsgitter als Transmissionsgitter oder als Reflexionsgitter ausgeführt sein. Bei einer Drehung des Beugungsgitters wandert der zu einer bestimmten Raman-Linie gehörende Lichtstrahl über die Detektor-Einheit und überstreicht bei entsprechender Ansteuerung des Antriebs die Grenze zwischen den beiden Einzeldetektoren in gewünschter Weise.

Alternativ oder zusätzlich kann das Lasersystem einen abstimmbaren Laser umfassen, wobei die Stellvorrichtung eine elektronische Steuereinrichtung zum Ändern der Wellenlänge des abstimmbaren Lasers umfasst. Beispielsweise kann der abstimmbare Laser ein Halbleiterlaser, ein Festkörperlaser oder ein Farbstofflaser sein.

Gemäß einer weiteren Ausführungsform der Erfindung umfasst die Stellvorrichtung eine steuerbare Positioniervorrichtung zum Verschieben der Detektor-Einheit. Die Verlagerung des Lichtflecks von einem der Einzeldetektoren zu dem anderen Einzeldetektor kann also auch bei feststehendem Beugungsgitter und unveränderlicher Ausgangswellenlänge des Lasersystems erfolgen, indem die Detektor-Einheit relativ zum Lichtstrahl bewegt wird. Die Positioniervorrichtung kann zum Beispiel einen elektrischen oder piezoelektrischen Aktuator umfassen.

Die Einzeldetektoren sind bevorzugt als Punktdetektoren oder als Einkanaldetektoren ausgeführt. Es ist dann keine Bereitstellung von kostspieligen Zeilen- oder Matrixdetektoren wie CCD-Anordnungen (charge coupled devices) erforderlich, so dass die Herstellungskosten und der erforderliche Bauraum geringgehalten werden können.

Vorzugsweise sind die Einzeldetektoren als Silizium-Photomultiplier ausgeführt, welche eine hohe Empfindlichkeit aufweisen und dennoch nur relativ wenig Platz beanspruchen.

Die elektronische Auswertungseinrichtung ist bevorzugt dazu ausgebildet, anhand einer Höhe der wenigstens einen Raman-Linie eine Konzentration eines in der Probensubstanz vorhandenen Stoffs zu bestimmen. Insbesondere kann eine erfindungsgemäße Analysevorrichtung zur Gaskonzentrationsbestimmung ausgebildet sein. Der Vorteil der hohen spektralen Auflösung und der dementsprechend hohen Selektivität kommt hierbei besonders zum Tragen.

Gemäß einer speziellen Ausgestaltung der Erfindung ist die elektronische Auswertungseinrichtung dazu ausgebildet, eine Differenz und/oder ein Verhältnis der Signale der Einzeldetektoren zu bilden und/oder auszuwerten. Eine solche Signalauswertung kann einer unerwünschten Signalverschlechterung durch allgemeines Streulicht, durch Untergrundstrahlung wie zum Beispiel Fluoreszenz oder durch Alterungseffekte der Detektor-Einheit entgegenwirken. Eine Differenz- und/oder eine Verhältnisbildung der Signale der Einzeldetektoren kann beispielsweise in der Auswertungseinrichtung selbst oder in einer der Auswertungseinrichtung vorgelagerten elektronischen Schaltung erfolgen, welche vorzugsweise ein Bestandteil der Detektor-Einheit ist.

Gemäß einer speziellen Ausgestaltung ist vorgesehen, dass das Lasersystem einen gepulsten Laser umfasst und die elektronische Auswertungseinrichtung dazu ausgebildet ist, beim Bestimmen der wenigstens einen Raman-Linie einen Takt des gepulsten Lasers zu berücksichtigen. Speziell kann das Lasersystem einen gepulsten Laser mit relativ geringem Tastgrad, also einem relativ geringen Quotienten aus Pulsdauer und Periodendauer, umfassen. Beispielsweise kann der gepulste Laser etwa 1 ns Pulsdauer und etwa 1 ms Periodendauer aufweisen. Mittels solcher Lasersysteme ist eine beträchtliche Verringerung des Detektorrauschens möglich, indem die scharfe zeitliche Korrelation zwischen Laserimpuls und Raman-Signal ausgenutzt wird und nur zu solchen Zeiten Signale aufgezeichnet werden, in denen aus Raman-Streuung hervorgegangene Photonen auf die Detektor-Einheit treffen.

Eine weitere Ausführungsform der Erfindung sieht vor, dass die elektronische Auswertungseinrichtung dazu ausgebildet ist, beim Bestimmen der wenigstens einen Raman-Linie das Signal eines der Einzeldetektoren als Nutzsignal und das Signal des anderen Einzeldetektors als Referenzsignal heranzuziehen. Dadurch wird einer unerwünschten Signalverschlechterung infolge von Störstrahlung entgegengewirkt.

Es kann ferner vorgesehen sein, dass das Lasersystem einen Laser mit veränderbarer Spektralbreite aufweist und die elektronische Auswertungseinrichtung dazu ausgebildet ist, die wenigstens eine Raman-Linie beruhend auf der Änderung der Signale der Einzeldetektoren bei einer Änderung der Spektralbreite des Lasers zu bestimmen. Aus der bestimmten Signaländerung ergeben sich zusätzliche Informationen über die betreffende Raman-Linie.

Die Erfindung betrifft auch ein Verfahren zum Analysieren einer Probensubstanz mittels Raman-Spektroskopie, mit den Schritten:
Bestrahlen einer Probensubstanz mit Laserlicht;
Spektrales Aufspalten von Streulicht, das von der bestrahlten Probensubstanz ausgeht, mittels eines dispersiven optischen Elements,
Erfassen zumindest eines Teils des spektral aufgespaltenen Streulichts mittels einer Detektor-Einheit, die zwei nebeneinander angeordnete Einzeldetektoren aufweist, die zum Ausgeben jeweiliger separater Signale ausgebildet sind; und Auswerten des erfassten Streulichts unter Berücksichtigung der Signale beider Einzeldetektoren der Detektor-Einheit, um wenigstens eine Raman-Linie zu bestimmen.

Mittels Auswertung der beiden separaten Signale kann eine verbesserte spektrale Auflösung erzielt werden. Insbesondere können die Signale beider Einzeldetektoren in Beziehung zueinander gesetzt werden. Durch die verbesserte Auflösung ist es möglich, auch komplexe Gemische mit vielen verschiedenen Stoffe zuverlässig zu analysieren.

Vorzugsweise wird für das Bestimmen der wenigstens einen Raman-Linie der betreffende Anteil des gestreuten Lichts von einem der Einzeldetektoren zu dem anderen Einzeldetektor verlagert.

Gemäß einer Ausgestaltung der Erfindung wird/werden das Signal wenigstens eines der Einzeldetektoren und vorzugsweise die Signale beider Einzeldetektoren vor und nach der Verlagerung miteinander verglichen.

Andere Vorteile und Ausgestaltungen des Verfahrens und deren Vorteile ergeben sich in analoger Weise aus den obigen Schilderungen zu den bevorzugten Ausgestaltungen der erfindungsgemäßen Analysevorrichtung.

Weiterbildungen der Erfindung sind auch den abhängigen Ansprüchen, der Beschreibung sowie den beigefügten Zeichnungen zu entnehmen.

Die Erfindung wird nachfolgend beispielhaft anhand der schematischen Zeichnungen beschrieben.
- Fig. 1: ist eine vereinfachte Draufsicht auf eine Analysevorrichtung gemäß einer ersten Ausführungsform der Erfindung.
- Fig. 2: ist eine Teildarstellung einer Analysevorrichtung gemäß einer zweiten Ausführungsform der Erfindung.
- Fig. 3: ist eine Teildarstellung einer Analysevorrichtung gemäß einer dritten Ausführungsform der Erfindung.
- Fig. 4: zeigt zwei Raman-Linien, die verschiedenen Einstrahlungs-Wellenlängen zugeordnet sind.

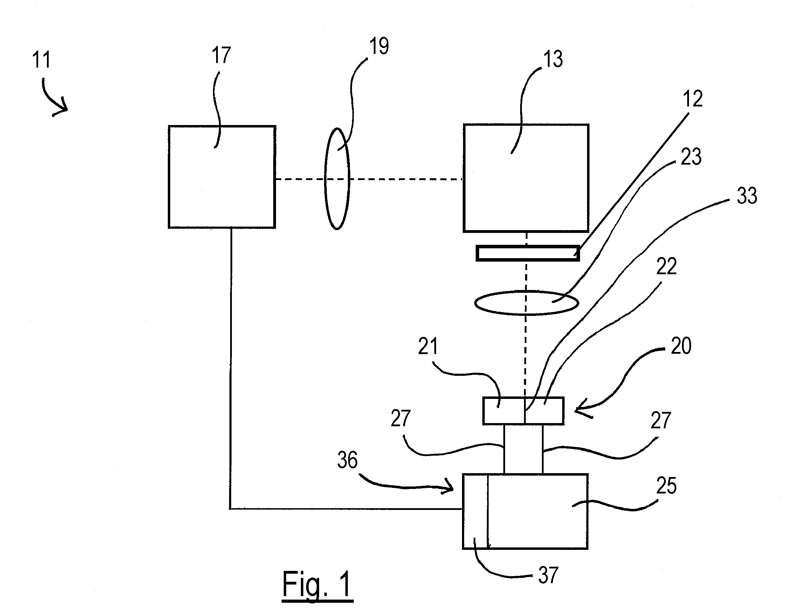

Die in Fig. 1 dargestellte, gemäß einer Ausführungsform der Erfindung gestaltete Analysevorrichtung 11 dient zum Analysieren einer gasförmigen oder flüssigen Probensubstanz mittels Raman-Spektroskopie. Die Probensubstanz befindet sich in einem Probenraum 13 wie zum Beispiel einer Glasküvette. Zum Bestrahlen der in dem Probenraum 13 befindlichen Probensubstanz mit Laserlicht ist ein Lasersystem 17 vorgesehen, das beispielsweise eine Laserdiode umfasst. Um die Lichtintensität im Probenraum 13 zu erhöhen, wird mittels einer Fokussierungsoptik, zum Beispiel einer Fokussierungslinse 19 ein Fokus im Probenraum 13 erzeugt.

Die Analysevorrichtung 11 weist ferner eine Detektor-Einheit 20 auf, die zwei nebeneinander angeordnete Einzeldetektoren 21, 22 aufweist. Die Einzeldetektoren 21, 22 sind als Punktdetektoren ausgeführt, beispielsweise als Silizium-Photomultiplier.

Aus dem Probenraum 13 tretendes Streulicht wird mittels eines dispersiven optischen Elements 12 spektral aufgespalten und gelangt über eine Abbildungsoptik, zum Beispiel eine Abbildungslinse 23 auf die Detektor-Einheit 20, die mit einer elektronischen Auswertungseinrichtung 25 in Signalverbindung steht. Die elektronische Auswertungseinrichtung 25 ist dazu ausgebildet, anhand des von der Detektor-Einheit 20 empfangenen spektral aufgespaltenen Streulichts eine oder mehrere Raman-Linien der Probensubstanz zu bestimmen. Weiterhin ist die elektronische Auswertungseinrichtung 25 dazu ausgebildet, die Konzentration wenigstens eines in der Probensubstanz vorhandenen Stoffs anhand der Höhe der dem Stoff zugeordneten Raman-Linie zu bestimmen. Die bestimmte Konzentration kann auf einer Anzeigevorrichtung der Analysevorrichtung 11 angezeigt oder an einen Signalausgang ausgegeben werden, was in Fig. 1 jedoch nicht dargestellt ist.

Je nach Anwendung können weitere optische Komponenten wie Linsen, Spiegel und/oder Filter im Strahlengang angeordnet sein. Beispielhaft ist in Fig. 1 eine Anordnung gezeigt, bei welcher die Detektion des Streulichts rechtwinklig zur Einstrahlung erfolgt. Es könnte jedoch auch eine andere Geometrie vorliegen. Insbesondere könnte die Detektion koaxial zur Einstrahlung erfolgen, beispielsweise in einer Rückstreu- und/oder Transmissionsgeometrie.

Die Einzeldetektoren 21, 22 sind zum Ausgeben jeweiliger separater Signale 27 an die elektronische Auswertungseinrichtung 25 ausgebildet. Die elektronische Auswertungseinrichtung 25 ist ferner dazu ausgebildet, beim Bestimmen der Raman-Linie oder der mehreren Raman-Linien die Signale 27 beider Einzeldetektoren 21, 22 der Detektor-Einheit 20 zu berücksichtigen. Insbesondere kann die elektronische Auswertungseinrichtung 25 dazu ausgebildet sein, eine Differenz und/oder ein Verhältnis der Signale 27 der Einzeldetektoren 21, 22 zu bilden. Auf diese Weise können die Raman-Linien genauer bestimmt werden und somit auch komplexe Stoffgemische untersucht werden.

Beispielsweise kann die elektronische Auswertungseinrichtung das Signal 27 eines der Einzeldetektoren 21, 22 als Nutzsignal und das Signal des anderen Einzeldetektors 21, 22 als Referenzsignal heranziehen. Alternativ oder zusätzlich kann die Spektralbreite des Lasersystems 17 veränderbar sein, wobei die elektronische Auswertungseinrichtung 25 die Änderung der Signale 27 der Einzeldetektoren 21, 22 bei einer Änderung der Spektralbreite für eine weitergehende Analyse der Probensubstanz nutzt.

Vorzugsweise ist jedoch eine Stellvorrichtung 36 dazu vorgesehen, das zu einer vorgegebenen Raman-Linie gehörende spektral aufgespaltene Streulicht von einem der Einzeldetektoren 21, 22 zu dem anderen Einzeldetektor 21, 22 zu verlagern - über die Grenze 33 zwischen den Einzeldetektoren 21, 22 hinweg. Bei der in Fig. 1 gezeigten Ausführungsform ist die Ausgangswellenlänge des Lasersystems 17 abstimmbar und die Stellvorrichtung 36 weist eine elektronische Steuereinrichtung 37 zum Ändern der Ausgangswellenlänge des Lasersystems 17 auf. Bei dem Ausführungsbeispiel gemäß Fig. 1 sind die elektronische Auswertungseinheit 25 und die elektronische Steuereinrichtung 37 zu einer Einheit zusammengefasst, was jedoch nicht zwingend ist.

In Fig. 1 geben die durchgezogenen Linien zwischen der Detektor-Einheit 20 und der elektronischen Auswertungseinrichtung 25 Signalleitungen an, über welche die Signale 27 übertragen werden. Die gestrichelten Linien geben den Weg des eingestrahlten Lichts und des untersuchten Streulichts an.

Gemäß einer nicht dargestellten Ausgestaltung werden die Signale 27 an eine elektronische Schaltung ausgegeben, die in die Detektor-Einheit 20 integriert ist. Die elektronische Schaltung nimmt eine Vorverarbeitung der Signale 27 vor, die zum Beispiel eine Differenzbildung umfasst. Die elektronische Schaltung gibt dann ein vorverarbeitetes Signal oder mehrere vorverarbeitete Signale an die elektronische Auswertungseinrichtung 25 aus.

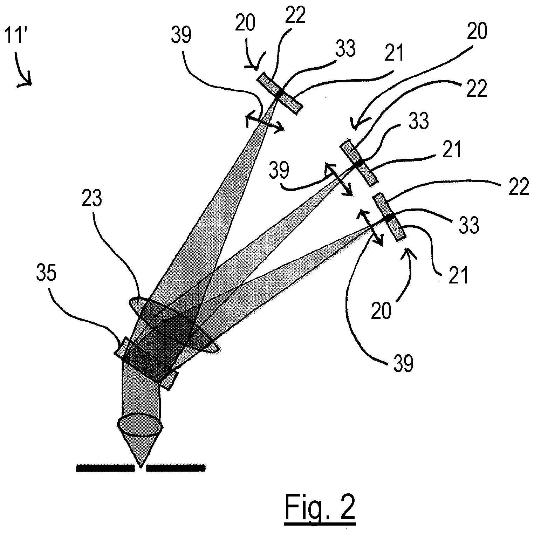

Fig. 2 zeigt den Detektionsbereich einer erfindungsgemäßen Analysevorrichtung 11', die ähnlich gestaltet ist wie die zuvor beschriebene Analysevorrichtung 11, jedoch drei Detektor-Einheiten 20 aufweist, die sich an unterschiedlichen Positionen befinden. Jede der drei Detektor-Einheiten 20 weist zwei nebeneinander angeordnete Einzeldetektoren 21, 22 auf. Die Positionen der Detektor-Einheiten 20 sind in Anhängigkeit von der Art der Probensubstanz anhand von erwarteten Raman-Linien ausgewählt. Es versteht sich, dass je nach Anwendung auch lediglich zwei Detektor-Einheiten 20 oder mehr als drei Detektor-Einheiten 20 vorgesehen sein können.

Die in Fig. 2 dargestellte Analysevorrichtung 11' weist ein Beugungsgitter 35 auf, um das Streulicht spektral aufzuspalten und diejenigen Anteile des gestreuten Lichts, die den zu betrachtenden Raman-Linien zugeordnet sind, auf die einzelnen Detektor-Einheiten 20 zu lenken. Bei der in Fig. 2 gezeigten Ausführungsform ist das Beugungsgitter 35 ein Transmissionsgitter. Grundsätzlich könnte anstelle des Beugungsgitters 35 auch ein Prisma oder ein anderes dispersives optisches Element vorgesehen sein. Wie bei der Ausführungsform gemäß Fig. 1 wird das zu den Raman-Linien gehörende Streulicht von einem der Einzeldetektoren 21, 22 der jeweiligen Detektor-Einheit 20 zu dem anderen Einzeldetektor 21, 22 verlagert, indem die Ausgangswellenlänge des Lasersystems 17 verändert wird. Dies ist in Fig. 2 durch Doppelpfeile 39 angegeben.

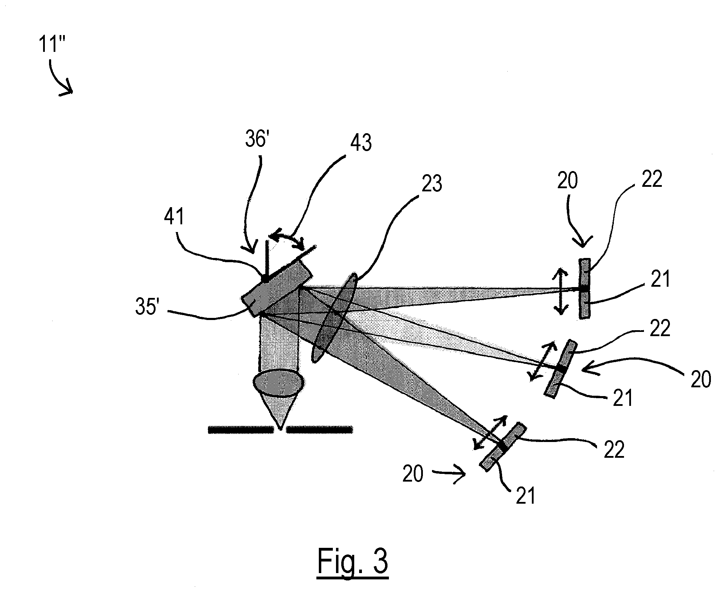

Alternativ kann die Verlagerung auch wie bei der in Fig. 3 gezeigten Analysevorrichtung 11" durch eine Bewegung des Beugungsgitters 35' - hier in Form eines Reflexionsgitters - bewerkstelligt werden. Als Stellvorrichtung 36' ist hierbei ein nicht dargestellter Antrieb für das um eine Rotationsachse 41 drehbare Beugungsgitter 35' vorgesehen. Durch Ändern der Winkelstellung 43 des Beugungsgitters 35' kann die Position des zu analysierenden Lichtflecks verändert werden.

Grundsätzlich könnte die Stellvorrichtung auch durch jeweilige steuerbare Positioniervorrichtungen zum Verschieben der Detektor-Einheiten 20 gebildet sein.

Um eine Probensubstanz mittels Raman-Spektroskopie zu analysieren, wird diese zunächst mit Laserlicht bestrahlt. Das von der bestrahlten Probensubstanz ausgehende Streulicht wird spektral aufgespalten und mittels der Detektor-Einheit 20 oder der mehreren Detektor-Einheiten 20 erfasst. Das erfasste Streulicht wird unter Berücksichtigung der Signale 27 der Einzeldetektoren 21, 22 ausgewertet, um eine oder mehrere Raman-Linien zu bestimmen. Hierfür wird der betreffende Anteil des gestreuten Lichts von einem der Einzeldetektoren 21 zu dem anderen Einzeldetektor 22 verlagert. Die Signale 27 der Einzeldetektoren 21, 22 vor und nach der Verlagerung werden miteinander verglichen.

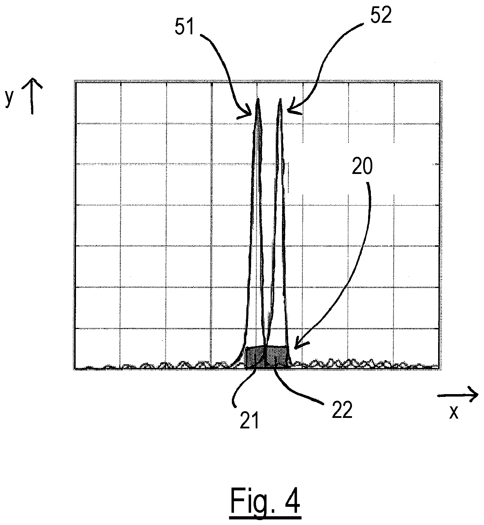

Fig. 4 zeigt eine Raman-Linie 51, wobei die x-Achse die Wellenlänge angibt und die y-Achse die Intensität angibt. Bereits bei einer geringfügigen Änderung der Ausgangswellenlänge des Lasersystems 17 (Fig. 1) wird die Raman-Linie 51 spektral verschoben, wie durch das Bezugszeichen 52 angegeben ist. Damit geht auch eine räumliche Verschiebung auf der Detektor-Einheit 20 einher. Speziell beträgt der Wellenlängen-Unterschied bei dem gezeigten Beispiel 0,5 nm. Ein solcher, relativ geringfügiger Unterschied reicht in der Regel schon aus, eine nahezu vollständige Verlagerung des Intensitätspeaks von einem Einzeldetektor 21 auf den anderen Einzeldetektor 22 zu bewirken. Somit ergibt sich unabhängig von der Größe der Einzeldetektoren 21, 22 eine besonders gute spektrale Auflösung. Indem pro Raman-Linie 51 nur zwei Punktdetektoren eingesetzt werden und auf aufwändige CCD-Anordnungen verzichtet wird, sind die Herstellungskosten einer erfindungsgemäßen Analysevorrichtung 11, 11', 11" dennoch gering.

### Bezugszeichenliste:

- 11, 11', 11": Analysevorrichtung
- 12: dispersives optisches Element
- 13: Probenraum
- 17: Lasersystem
- 19: Fokussierungslinse
- 20: Detektor-Einheit
- 21: Einzeldetektor
- 22: Einzeldetektor
- 23: Abbildungslinse
- 25: elektronische Auswertungseinrichtung
- 27: Signal
- 33: Grenze
- 35, 35': Beugungsgitter
- 36, 36': Stellvorrichtung
- 37: elektronische Steuereinrichtung
- 39: Doppelpfeil
- 41: Rotationsachse
- 43: Winkelstellung
- 51: Raman-Linie
- 52: Raman-Linie

## Patentansprüche

1. Analysevorrichtung (11, 11', 11") zum Analysieren einer Probensubstanz mittels Raman-Spektroskopie,
mit einem Probenraum (13) zur Aufnahme der Probensubstanz,
einem Lasersystem (17) zum Bestrahlen der in dem Probenraum (13) befindlichen Probensubstanz mit Laserlicht,
einem dispersiven optischen Element (12, 35, 35') zur spektralen Aufspaltung von Streulicht, das von der bestrahlten Probensubstanz ausgeht, wenigstens einer Detektor-Einheit (20) zum Empfangen wenigstens eines Teils des spektral aufgespaltenen Streulichts und
einer elektronischen Auswertungseinrichtung (25), die mit der wenigstens einen Detektor-Einheit (20) in Signalverbindung steht und dazu ausgebildet ist, anhand des von der Detektor-Einheit (20) empfangenen Streulichts wenigstens eine Raman-Linie (51, 52) zu bestimmen,
wobei die Detektor-Einheit (20) zwei nebeneinander angeordnete Einzeldetektoren (21, 22) aufweist, die zum Ausgeben jeweiliger separater Signale (27) ausgebildet sind, wobei die elektronische Auswertungseinrichtung (25) dazu ausgebildet ist, beim Bestimmen der wenigstens einen Raman-Linie (51, 52) die Signale (27) beider Einzeldetektoren (21, 22) der Detektor-Einheit (20) zu berücksichtigen.

2. Analysevorrichtung nach Anspruch 1,
wobei die Analysevorrichtung (11, 11', 11") eine Stellvorrichtung (36, 36') umfasst, die dazu ausgebildet ist, für das Bestimmen der wenigstens einen Raman-Linie (51, 52) den betreffenden Anteil des gestreuten Lichts von einem der Einzeldetektoren (21, 22) zu dem anderen Einzeldetektor (21, 22) zu verlagern.

3. Analysevorrichtung nach Anspruch 2,
wobei die elektronische Auswertungseinrichtung (25) dazu ausgebildet ist, das Signal (27) wenigstens eines der Einzeldetektoren (21, 22) und vorzugsweise die Signale (27) beider Einzeldetektoren (21, 22) vor und nach der Verlagerung miteinander zu vergleichen.

4. Analysevorrichtung nach Anspruch 2 oder 3,
wobei das dispersive optische Element (12) ein Beugungsgitter (35, 35') umfasst, das derart angeordnet und ausgebildet ist, dass derjenige Anteil des gestreuten Lichts, welcher einer vorgegebenen Raman-Linie (51, 52) zugeordnet ist, auf die Detektor-Einheit (20) trifft, wobei das Beugungsgitter (35, 35') um eine Rotationsachse (41) drehbar ist und die Stellvorrichtung (36') einen steuerbaren Antrieb für das drehbare Beugungsgitter (35, 35') umfasst.

5. Analysevorrichtung nach einem der Ansprüche 2 bis 4,
wobei das Lasersystem (17) einen abstimmbaren Laser umfasst und die Stellvorrichtung (36) eine elektronische Steuereinrichtung (37) zum Ändern der Wellenlänge des abstimmbaren Lasers umfasst.

6. Analysevorrichtung nach einem der Ansprüche 2 bis 5,
wobei die Stellvorrichtung eine steuerbare Positioniervorrichtung zum Verschieben der Detektor-Einheit (20) umfasst.

7. Analysevorrichtung nach einem der vorstehenden Ansprüche,
wobei die Einzeldetektoren (21, 22) als Punktdetektoren oder als Einkanaldetektoren ausgeführt sind.

8. Analysevorrichtung nach einem der vorstehenden Ansprüche,
wobei die Einzeldetektoren (21, 22) als Silizium-Photomultiplier ausgeführt sind.

9. Analysevorrichtung nach einem der vorstehenden Ansprüche,
wobei die elektronische Auswertungseinrichtung (25) dazu ausgebildet ist, anhand einer Höhe der wenigstens einen Raman-Linie (51, 52) eine Konzentration eines in der Probensubstanz vorhandenen Stoffs zu bestimmen.

10. Analysevorrichtung nach einem der vorstehenden Ansprüche,
wobei die elektronische Auswertungseinrichtung (25) dazu ausgebildet ist, eine Differenz und/oder ein Verhältnis der Signale der Einzeldetektoren (21, 22) zu bilden und/oder auszuwerten.

11. Analysevorrichtung nach einem der vorstehenden Ansprüche,
wobei die elektronische Auswertungseinrichtung (25) dazu ausgebildet ist, beim Bestimmen der wenigstens einen Raman-Linie (51, 52) das Signal (27) eines der Einzeldetektoren (21, 22) als Nutzsignal und das Signal des anderen Einzeldetektors (21, 22) als Referenzsignal heranzuziehen.

12. Analysevorrichtung nach einem der vorstehenden Ansprüche,
wobei das Lasersystem (17) einen Laser mit veränderbarer Spektralbreite aufweist und die elektronische Auswertungseinrichtung (25) dazu ausgebildet ist, die wenigstens eine Raman-Linie (51, 52) beruhend auf der Änderung der Signale (27) der Einzeldetektoren (21, 22) bei einer Änderung der Spektralbreite des Lasers zu bestimmen.

13. Verfahren zum Analysieren einer Probensubstanz mittels Raman-Spektroskopie, mit den Schritten:
Bestrahlen einer Probensubstanz mit Laserlicht,
Spektrales Aufspalten von Streulicht, das von der bestrahlten Probensubstanz ausgeht, mittels eines dispersiven optischen Elements (12, 35, 35'), Erfassen zumindest eines Teils des spektral aufgespaltenen Streulichts mittels einer Detektor-Einheit (20), die zwei nebeneinander angeordnete Einzeldetektoren (21, 22) aufweist, die zum Ausgeben jeweiliger separater Signale (27) ausgebildet sind, und
Auswerten des erfassten Streulichts unter Berücksichtigung der Signale (27) beider Einzeldetektoren (21, 22) der Detektor-Einheit (20), um wenigstens eine Raman-Linie (51, 52) zu bestimmen.

14. Verfahren nach Anspruch 13,
wobei für das Bestimmen der wenigstens einen Raman-Linie (51, 52) der betreffende Anteil des gestreuten Lichts von einem der Einzeldetektoren (21, 22) zu dem anderen Einzeldetektor (21, 22) verlagert wird.

15. Verfahren nach Anspruch 14,
wobei das Signal (27) wenigstens eines der Einzeldetektoren (21, 22) und vorzugsweise die Signale (27) beider Einzeldetektoren (21, 22) vor und nach der Verlagerung miteinander verglichen werden.

## Geänderte Patentansprüche

### Geänderte Patentansprüche gemäss Regel 137(2) EPÜ.

1. Analysevorrichtung (11, 11', 11") zum Analysieren einer Probensubstanz mittels Raman-Spektroskopie,
mit einem Probenraum (13) zur Aufnahme der Probensubstanz,
einem Lasersystem (17) zum Bestrahlen der in dem Probenraum (13) befindlichen Probensubstanz mit Laserlicht,
einem dispersiven optischen Element (12, 35, 35') zur spektralen Aufspaltung von Streulicht, das von der bestrahlten Probensubstanz ausgeht, wenigstens einer Detektor-Einheit (20) zum Empfangen wenigstens eines Teils des spektral aufgespaltenen Streulichts und
einer elektronischen Auswertungseinrichtung (25), die mit der wenigstens einen Detektor-Einheit (20) in Signalverbindung steht und dazu ausgebildet ist, anhand des von der Detektor-Einheit (20) empfangenen Streulichts wenigstens eine Raman-Linie (51, 52) zu bestimmen,
wobei die Detektor-Einheit (20) zwei nebeneinander angeordnete Einzeldetektoren (21, 22) aufweist, die zum Ausgeben jeweiliger separater Signale (27) ausgebildet sind, wobei die elektronische Auswertungseinrichtung (25) dazu ausgebildet ist, beim Bestimmen der wenigstens einen Raman-Linie (51, 52) die Signale (27) beider Einzeldetektoren (21, 22) der Detektor-Einheit (20) zu berücksichtigen,
**dadurch gekennzeichnet, dass**
die Einzeldetektoren (21, 22) als Silizium-Photomultiplier ausgeführt sind, wobei jeweilige Lichtempfangsflächen der Einzeldetektoren, gegebenenfalls unter Zwischenanordnung einer Trennschicht oder Trennlage, aneinander angrenzen.

2. Analysevorrichtung nach Anspruch 1,
wobei die Analysevorrichtung (11, 11', 11") eine Stellvorrichtung (36, 36') umfasst, die dazu ausgebildet ist, für das Bestimmen der wenigstens einen Raman-Linie (51, 52) den betreffenden Anteil des gestreuten Lichts von einem der Einzeldetektoren (21, 22) zu dem anderen Einzeldetektor (21, 22) zu verlagern.

3. Analysevorrichtung nach Anspruch 2,
wobei die elektronische Auswertungseinrichtung (25) dazu ausgebildet ist, das Signal (27) wenigstens eines der Einzeldetektoren (21, 22) und vorzugsweise die Signale (27) beider Einzeldetektoren (21, 22) vor und nach der Verlagerung miteinander zu vergleichen.

4. Analysevorrichtung nach Anspruch 2 oder 3,
wobei das dispersive optische Element (12) ein Beugungsgitter (35, 35') umfasst, das derart angeordnet und ausgebildet ist, dass derjenige Anteil des gestreuten Lichts, welcher einer vorgegebenen Raman-Linie (51, 52) zugeordnet ist, auf die Detektor-Einheit (20) trifft, wobei das Beugungsgitter (35, 35') um eine Rotationsachse (41) drehbar ist und die Stellvorrichtung (36') einen steuerbaren Antrieb für das drehbare Beugungsgitter (35, 35') umfasst.

5. Analysevorrichtung nach einem der Ansprüche 2 bis 4,
wobei das Lasersystem (17) einen abstimmbaren Laser umfasst und die Stellvorrichtung (36) eine elektronische Steuereinrichtung (37) zum Ändern der Wellenlänge des abstimmbaren Lasers umfasst.

6. Analysevorrichtung nach einem der Ansprüche 2 bis 5,
wobei die Stellvorrichtung eine steuerbare Positioniervorrichtung zum Verschieben der Detektor-Einheit (20) umfasst.

7. Analysevorrichtung nach einem der vorstehenden Ansprüche,
wobei die Einzeldetektoren (21, 22) als Punktdetektoren oder als Einkanaldetektoren ausgeführt sind.

8. Analysevorrichtung nach einem der vorstehenden Ansprüche,
wobei die elektronische Auswertungseinrichtung (25) dazu ausgebildet ist, anhand einer Höhe der wenigstens einen Raman-Linie (51, 52) eine Konzentration eines in der Probensubstanz vorhandenen Stoffs zu bestimmen.

9. Analysevorrichtung nach einem der vorstehenden Ansprüche,
wobei die elektronische Auswertungseinrichtung (25) dazu ausgebildet ist, eine Differenz und/oder ein Verhältnis der Signale der Einzeldetektoren (21, 22) zu bilden und/oder auszuwerten.

10. Analysevorrichtung nach einem der vorstehenden Ansprüche,
wobei die elektronische Auswertungseinrichtung (25) dazu ausgebildet ist, beim Bestimmen der wenigstens einen Raman-Linie (51, 52) das Signal (27) eines der Einzeldetektoren (21, 22) als Nutzsignal und das Signal des anderen Einzeldetektors (21, 22) als Referenzsignal heranzuziehen.

11. Analysevorrichtung nach einem der vorstehenden Ansprüche,
wobei das Lasersystem (17) einen Laser mit veränderbarer Spektralbreite aufweist und die elektronische Auswertungseinrichtung (25) dazu ausgebildet ist, die wenigstens eine Raman-Linie (51, 52) beruhend auf der Änderung der Signale (27) der Einzeldetektoren (21, 22) bei einer Änderung der Spektralbreite des Lasers zu bestimmen.

12. Verfahren zum Analysieren einer Probensubstanz mittels Raman-Spektroskopie, mit den Schritten:
Bestrahlen einer Probensubstanz mit Laserlicht,
Spektrales Aufspalten von Streulicht, das von der bestrahlten Probensubstanz ausgeht, mittels eines dispersiven optischen Elements (12, 35, 35'), Erfassen zumindest eines Teils des spektral aufgespaltenen Streulichts mittels einer Detektor-Einheit (20), die zwei nebeneinander angeordnete Einzeldetektoren (21, 22) aufweist, die zum Ausgeben jeweiliger separater Signale (27) ausgebildet sind, wobei die Einzeldetektoren (21, 22) als Silizium-Photomultiplier ausgeführt sind und wobei jeweilige Lichtempfangsflächen der Einzeldetektoren, gegebenenfalls unter Zwischenanordnung einer Trennschicht oder Trennlage, aneinander angrenzen, und
Auswerten des erfassten Streulichts unter Berücksichtigung der Signale (27) beider Einzeldetektoren (21, 22) der Detektor-Einheit (20), um wenigstens eine Raman-Linie (51, 52) zu bestimmen.

13. Verfahren nach Anspruch 12,
wobei für das Bestimmen der wenigstens einen Raman-Linie (51, 52) der betreffende Anteil des gestreuten Lichts von einem der Einzeldetektoren (21, 22) zu dem anderen Einzeldetektor (21, 22) verlagert wird.

14. Verfahren nach Anspruch 13,
wobei das Signal (27) wenigstens eines der Einzeldetektoren (21, 22) und vorzugsweise die Signale (27) beider Einzeldetektoren (21, 22) vor und nach der Verlagerung miteinander verglichen werden.
